# EUROPÄISCHE PATENTSCHRIFT

(11) **EP 3 292 025 B1**
(45) Veröffentlichungstag und Bekanntmachung des Hinweises auf die Patenterteilung: **27.03.2019**
(21) Anmeldenummer: 16717908.4
(22) Anmeldetag: 20.04.2016
(51) Int. Cl.: B60R 11/04

(54) **VORRICHTUNG ZUR BILDERFASSUNG EINES AUSSENBEREICHES EINES KRAFTFAHRZEUGS**
DEVICE HAVING A CAMERA UNIT FOR RECORDING IMAGES OF THE OUTER AREA OF A MOTOR VEHICLE
DISPOSITIF AVEC UNE CAMERA POUR PRENDRE D'IMAGES SUR L'EXTÉRIEUR D'UN VÉHICULE

(30) Priorität: 06.05.2015 DE 102015107070
(43) Veröffentlichungstag der Anmeldung: 14.03.2018
(73) Patentinhaber: Huf Hülsbeck & Fürst GmbH & Co. KG, 42551 Velbert (DE)
(72) Erfinder: BUSS, Wolfgang, 42697 Solingen (DE)
(74) Vertreter: Zenz Patentanwälte Partnerschaft mbB
(86) Internationale Anmeldenummer: PCT/EP2016/058726
(87) Internationale Veröffentlichungsnummer: WO 2016/177577

(56) Entgegenhaltungen:
- WO-A2-2011/154290
- DE-A1-102009 008 281
- DE-A1-102009 015 610
- DE-A1-102010 060 573
- DE-A1-102013 103 930

## Beschreibung

Die Erfindung richtet sich auf eine Vorrichtung zur Bilderfassung des Außenbereiches eines Kraftfahrzeugs und umfasst eine Kameraeinheit, die ein Objektiv aufweist, eine Trägerbaugruppe, die eine Durchgangsöffnung aufweist und in welcher die Kameraeinheit zwischen einer in die Trägerbaugruppe zurückgezogenen Ruheposition und einer Aktivposition, in welcher die Kameraeinheit zumindest abschnittsweise aus der Durchgangsöffnung der Trägerbaugruppe nach außen hervorsteht, bewegbar aufgenommen ist, und ein Deckelelement, das zwischen einer die Durchgangsöffnung der Trägerbaugruppe verschließenden Schließposition und einer Öffnungsposition bewegbar ausgebildet ist.

Vorrichtungen mit einer Kameraeinheit, die zur Bilderfassung des Außenbereiches eines Kraftfahrzeugs dienen, sind aus dem Stand der Technik bereits bekannt. Derartige Vorrichtungen umfassen eine Kameraeinheit, die in einem Gehäuse der Kameraeinheit zwischen einer Ruheposition und einer Aktivposition beweglich aufgenommen ist. Beispielsweise können derartige Kameraeinheiten im Bereich des assistierten Einparkens von Kraftfahrzeugen zum Einsatz kommen. Wird beispielsweise der Rückwärtsgang des Kraftfahrzeugs eingelegt, verfährt die Kameraeinheit von der Ruheposition in die Aktivposition, wobei die Kameraeinheit wenigstens teilweise aus dem Gehäuse herausgefahren wird. Dadurch wird der Bereich hinter dem Kraftfahrzeug durch die Kameraeinheit bildlich erfasst und auf einem Display für den Fahrer des Kraftfahrzeugs angezeigt. Ist die Rückwärtsfahrt beendet und nimmt der Fahrer des Kraftfahrzeugs den Rückwärtsgang wieder heraus, kann die Kameraeinheit von der Aktivposition wieder zurück in die Ruheposition schwenken.

Um die Kameraeinheit zumindest in der Ruheposition vor Verunreinigungen zu schützen, ist ein Deckelelement vorgesehen, durch welches die Öffnung, durch die die Kameraeinheit aus dem Gehäuse der Kameraeinheit herausfährt, in der Ruheposition verschlossen werden kann. Folglich muss beim Übergang von der Ruheposition in die Aktivposition der Kameraeinheit das Deckelelement zugleich zwischen einer Schließposition und einer Öffnungsposition bewegt werden.

Eine Vorrichtung der Eingangs bezeichneten Art ist zum Beispiel aus der DE 10 2012 025 626 A1 bekannt. Bei dieser bekannten Vorrichtung zur Aufnahme einer Kameraeinheit ist in einem Gehäuse ein Schlitten bewegbar untergebracht, an welchem die Kameraeinheit befestigbar ist. Der Schlitten wird durch ein Getriebe angetrieben, welches Schaukelelemente aufweist, die mit dem Schlitten gelenkig verbunden sind. Jedes Schaukelelement ist um eine ortsfeste Achse am Gehäuse verschwenkbar. Nachteilig bei diesem Stand der Technik ist es, dass das Deckelelement schwenkbar an der Außenseite des Gehäuses gelagert ist und beim Aufschwenken ein entsprechender Raumbedarf an der Außenseite des Gehäuses vorhanden sein muss, was die Kompaktheit der Vorrichtung mit Kameraeinheit und Deckelelement negativ beeinträchtigt.

Ferner ist aus der DE 10 2007 052 402 eine Vorrichtung mit einer Kameraeinheit bekannt, die zur Bilderfassung des Außenbereiches eines Kraftfahrzeugs dient. Die Bewegung der darin offenbarten Kameraeinheit und die relativ zu der Kameraeinheit erfolgende Bewegung des offenbarten Deckelelementes umfasst mehrere Bewegungsschritte, so dass eine komplexe kinematische Ansteuerung des Deckelelementes erforderlich ist. Insbesondere erfordert die hierin offenbarte Vorrichtung zur Bewegung der Kameraeinheit und des Deckelelementes einen erheblichen Bauraum.

Die DE102010060573 reflektiert eine Vorrichtung nach dem Oberbegriff des Anspruchs 1.

Der Erfindung liegt die Aufgabe zugrunde eine Lösung zu schaffen, die auf konstruktiv einfache Weise und kostengünstig eine Vorrichtung mit einer Kameraeinheit und einem Deckelelement bereitstellt, die einen geringen Bauraum benötigt und die sich gleichzeitig durch einen gering gehaltenen Bewegungsweg und folglich durch eine schnelle Aktivierung auszeichnet.

Diese Aufgabe wird erfindungsgemäß gelöst durch eine Vorrichtung zur Bilderfassung des Außenbereiches eines Kraftfahrzeugs mit den Merkmalen gemäß dem Patentanspruch 1.

Die erfindungsgemäße Vorrichtung ist zur Bilderfassung des Außenbereiches eines Kraftfahrzeugs geeignet und umfasst eine Kameraeinheit mit einem Objektiv zur Bilderfassung des Außenbereiches eines Kraftfahrzeugs, eine Trägerbaugruppe, die eine Durchgangsöffnung aufweist und in welcher die Kameraeinheit zwischen einer in die Trägerbaugruppe zurückgezogenen Ruheposition und einer Aktivposition, in welcher die Kameraeinheit zumindest abschnittsweise aus der Durchgangsöffnung der Trägerbaugruppe nach außen hervorsteht, bewegbar aufgenommen ist, ein Deckelelement, das zwischen einer die Durchgangsöffnung der Trägerbaugruppe verschließenden Schließposition und einer Öffnungsposition bewegbar ausgebildet ist, und ein Bewegungselement, welches aus einer Bereitschaftsposition über eine Zwischenposition in eine Betriebsposition bewegbar ist. Das Bewegungselement ist an einer ersten Drehachse des Trägerbauteils drehbar gelagert, wobei ein an einer zweiten Drehachse des Trägerbauteils drehbar gelagertes Übertragungselement an dem Deckelelement angeformt ist. Das Bewegungselement und das Übertragungselement sind über eine bei der Bewegung des Bewegungselements aus der Bereitschaftsposition in die Zwischenposition das Deckelelement aus der Schließposition in die Öffnungsposition bewegende Deckelverbindung miteinander verbunden. Das Bewegungselement und die Kameraeinheit sind ferner über eine bei der Bewegung des Bewegungselements aus der Zwischenposition in die Betriebsposition das Deckelelement in der Öffnungsposition haltende und die Kameraeinheit aus der Ruheposition in die Aktivposition bewegende Kameraverbindung miteinander verbunden.

Vorteilhafte und zweckmäßige Ausgestaltungen und Weiterbildungen der Erfindung ergeben sich aus den Unteransprüchen.

Durch die Erfindung wird eine Vorrichtung mit einer Kameraeinheit zur Bilderfassung des Außenbereiches eines Kraftfahrzeugs zur Verfügung gestellt, die sich durch eine funktionsgerechte Konstruktion auszeichnet und einen kostengünstigen Aufbau aufweist. Erfindungsgemäß ist ein zweistufiger Mechanismus zum Ausfahren der Kameraeinheit vorgesehen, der sich durch eine Deckelverbindung und eine Kameraverbindung auszeichnet, die jeweils das Bewegungselement aufweisen, welches in einem ersten Bewegungsschritt aus seiner Bereitschaftsposition in seine Zwischenposition dafür sorgt, dass das Deckelelement in seine Öffnungsposition bewegt wird. In dem darauf folgenden zweiten Bewegungsschritt sorgt dann das Bewegungselement bei seiner Bewegung aus der Zwischenposition in die Bereitschaftsposition dafür, dass mit Hilfe der Deckelverbindung das Deckelelement in seiner Öffnungsposition gehalten wird und dass mit Hilfe der Kameraverbindung die Kameraeinheit aus ihrer Ruheposition in die Aktivposition bewegt wird. Obgleich das Bewegungselement während seiner Bewegung aus der Bereitschaftsposition über die Zwischenposition in die Betriebsposition um die erste Drehachse in die gleiche Drehrichtung gedreht wird, wird bei der Bewegung aus der Zwischenposition in die Betriebsposition das Deckelelement nicht weiter bewegt sondern vielmehr fest und in seiner Position gehalten. Die Verbindung zur Bewegung des Deckelelements und der Kameraeinheit über das Bewegungselement bewirkt, dass sowohl die Bewegung der Kameraeinheit als auch die Bewegung des Deckelelements eine Schwenkbewegung mit kompakter Bewegungskurve auf engstem Raume ist. Folglich werden das Deckelelement und die Kameraeinheit durch die beiden Verbindungen (Deckelverbindung und Kameraverbindung) derart geführt, dass der Platz zur Aufnahme und Bewegung der Kameraeinheit auf ein Mindestmaß reduziert werden kann und die Vorrichtung folglich einen einfachen Aufbau mit wenig Bauraum erfordert. Aufgrund der kompakten Bewegungskurve der Kameraeinheit kann durch die Erfindung die Zeitspanne für das Ausfahren der Kameraeinheit auf ein Mindestmaß reduziert werden.

In Ausgestaltung der Erfindung besteht eine einfache und kostengünstige Möglichkeit zur konstruktiven Realisierung der Deckelverbindung darin, dass die Deckelverbindung von einem ersten Zahnradsegment, welches an dem Übertragungselement ausgebildet ist, und einem mit dem ersten Zahnradsegment in Eingriff stehenden zweiten Zahnradsegment gebildet wird.

Die Erfindung sieht in weiterer Ausgestaltung der Deckelverbindung vor, dass das zweite Zahnradsegment an einem an einer dritten Drehachse des Trägerbauteils drehbar gelagerten Betätigungselement ausgebildet ist, welches mit dem Bewegungselement über eine Bewegungsmechanik bewegungsgekoppelt ist und zwischen einer Grundposition und einer Halteposition um die dritte Drehachse drehbar ist. Zwar bedeutet die Berücksichtigung einer dritten Drehachse eine aufwendigere Konstruktion. Jedoch wird dadurch der Vorteil erkauft, dass insbesondere Verschwenkungen zur Bewegung des Deckelelements auf sehr engem Raum möglich sind, wodurch insgesamt der Bauraum der Vorrichtung gering gehalten werden kann. Das Betätigungselement ist in der Bereitschaftsposition des Bewegungselements in einer Grundposition angeordnet und in der Zwischenposition sowie in der Betriebsposition des Bewegungselements in einer Halteposition angeordnet.

Dabei ist es im Hinblick auf eine günstige und einfache Konstruktion von Vorteil, wenn die Bewegungsmechanik einen ersten Zapfen, welcher an dem Bewegungselement im Abstand zur ersten Drehachse ausgebildet ist, und eine erste Führungsausnehmung, die in dem Betätigungselement ausgebildet ist, umfasst, wobei bei der Bewegung des Bewegungselements aus der Bereitschaftsposition in die Zwischenposition der erste Zapfen in der ersten Führungsausnehmung das Betätigungselement aus der Grundposition in die Halteposition drängend angeordnet ist. Der erste Zapfen im Zusammenspiel mit der ersten Führungsausnehmung sorgt folglich dafür, dass in dem ersten Bewegungsschritt des Bewegungselements das Deckelelement über die Bewegungsmechanik in die Öffnungsposition gedrängt wird.

Weil das Bewegungselement sich zur Bewegung der Kameraeinheit in deren Aktivposition weiter um die erste Drehachse dreht, das Deckelelement allerdings bereits in der Öffnungsposition angelangt ist, muss dafür gesorgt werden, dass bei weiterer Drehung des Bewegungselements um die erste Drehachse keine weitere Bewegung des Deckelelements erfolgt. Zu diesem Zweck sieht die Erfindung in weiterer Ausgestaltung der Vorrichtung vor, dass die Bewegungsmechanik einen zweiten Zapfen, welcher an dem Bewegungselement im Abstand zur ersten Drehachse ausgebildet ist, und eine zweite Führungsausnehmung, die in dem Betätigungselement ausgebildet ist, umfasst, wobei bei der Bewegung des Bewegungselements aus der Zwischenposition in die Betriebsposition der zweite Zapfen in der zweiten Führungsausnehmung sich bewegend und das Betätigungselement in der Halteposition haltend angeordnet ist. Insbesondere gelangt der erste Zapfen ab der Zwischenposition aus der ersten Führungsausnehmung, so dass nur noch der zweite Zapfen und die zweite Führungsausnehmung die Verbindung zwischen Betätigungselement und Bewegungselement bilden.

Obgleich sich der zweite Zapfen während der Bewegung des Bewegungselements innerhalb der zweiten Führungsausnehmung bewegt, bewirkt die Bewegung des Bewegungselements keine Bewegung des Betätigungselements, was daran liegt, dass der Krümmungsradius der zweiten Führungsausnehmung mit dem Radius übereinstimmt, mit welchem der zweite Zapfen in Bezug auf die erste Drehachse 11 verschwenkt wird. Daher sieht die Erfindung in Ausgestaltung vor, dass die Krümmungsradien der ersten Führungsausnehmung und der zweiten Führungsausnehmung unterschiedlich sind. Dadurch ist es möglich, dass zwar die Radien der beiden Zapfen identisch sind, jedoch aufgrund der unterschiedlichen Krümmungsradien der beiden Führungsausnehmungen es dazu kommt, dass ein Zapfen durch seine Bewegung in einer Führungsausnehmung eine Drehbewegung des Betätigungselements um die dritte Drehachse bewirkt, während die Bewegung des anderen Zapfens in der anderen Führungsausnehmung keine Drehung des Betätigungselements bewirkt und quasi das Betätigungselement nicht drängt oder dreht.

In Ausgestaltung der Erfindung ist es dann von Vorteil, wenn die Kameraverbindung von einem ersten Hebelarm, der an dem Bewegungselement ausgebildet ist und radial nach außen absteht, und einem Mitnehmerstift, der an einem Hebelelement angeformt ist, ausgebildet ist, wobei das Hebelelement über eine Drehgelenkverbindung drehbar mit der Kameraeinheit verbunden ist.

Zur kompakten Führung der Kameraeinheit sieht die Erfindung in weiterer Ausgestaltung vor, dass die Kameraeinheit an ihrem dem Objektiv abgewandten Längsende über das Hebelelement drehbar an einer vierten Drehachse des Trägerbauteils gelagert ist.

Im Hinblick auf die zweistufige Bewegung, bei welcher sich in einem ersten Schritt das Deckelelement in die Öffnungsposition bewegt und anschließend in einem zweiten Schritt sich die Kameraeinheit in die Aktivposition bewegt, ist es von besonderem Vorteil, wenn der erste Hebelarm in der Zwischenposition des Bewegungselements an dem Mitnehmerstift anliegt und bei Bewegung in die Betriebsposition derart den Mitnehmerstift drängt, dass die Verschwenkung des Hebelelements um die vierte Drehachse die Kameraeinheit aus der Ruheposition in die Aktivposition bewegt.

Die Erfindung sieht in weiterer Ausgestaltung vor, dass die Kameraverbindung einen zweiten Hebelarm umfasst und der Mitnehmerstift zwischen dem ersten und zweiten Hebelarm angeordnet ist, wobei bei einer Bewegung des Bewegungselements aus der Betriebsposition in die Bereitschaftsposition der zweite Hebelarm an dem Mitnehmerstift die Kameraeinheit zurück in die Ruheposition bewegend anliegt. Einer der beiden Hebelarme des Bewegungselements liegt je nach Bewegung des Bewegungselements an dem Mitnehmerstift an und sorgt dafür, dass je nach Drehrichtung der entsprechende Hebelarm die Kameraeinheit entweder aus der Ruheposition in die Aktivposition oder aus der Aktivposition in die Ruheposition bewegt.

Um die Kameraeinheit noch kompakter und platzsparender zu bewegen, ist es von besonderem Vorteil, wenn die Kameraeinheit an ihrem das Objektiv aufweisenden Längsende über ein Schwenkelement drehbar an einer Schwenkachse des Trägerbauteils gelagert ist. Somit wird die Bewegung der Kameraeinheit über das Schwenkelement und das Hebelelement geführt.

Schließlich sieht die Erfindung in weiterer Ausgestaltung vor, dass das Bewegungselement bei seiner Bewegung aus der Bereitschaftsposition in die Betriebsposition um die erste Drehachse dreht und das Deckelelement bei seiner Bewegung aus der Schließposition in die Öffnungsposition um die zweite Drehachse dreht.

Es sei angemerkt, dass im Sinne der Erfindung unter einer Trägerbaugruppe sowohl ein separates Gehäuse, in welcher die erfindungsgemäße Anordnung mit Kameraeinheit, Deckelelement und Bewegungsmechanik aufgenommen ist und die in der Fahrzeugkarosserie eingebaut werden kann, als auch eine Einbuchtung in der Fahrzeugkarosserie, in welcher die erfindungsgemäße Anordnung mit Kameraeinheit, Deckelelement und Bewegungsmechanik eingesetzt und montiert werden kann, zu verstehen ist. Die Aufgabe der Trägerbaugruppe erschöpft sich in der Funktion, die Anordnung mit Kameraeinheit, Deckelelement und Bewegungsmechanik aufzunehmen.

Ebenso sind im Sinne der Erfindung unter einer Drehachse Achsen zu verstehen, um die sich etwas, was daran gelagert ist, drehen kann. Dabei muss es keine Achse im Sinne eines stangenförmigen Elements oder einer angetriebenen Stange sein. Es kann sich bei den Drehachsen der vorliegenden Erfindung auch um Dreh- und Gelenkpunkte handeln, an denen ein Element punktuell drehbar gelagert bzw. angebracht ist. Ferner kann es sich bei dem Schwenkelement der vorliegenden Erfindung um ein Arm-Paar, also um zweiarmige bzw. doppelarmige Elemente handeln, die beidseitig der Kameraeinheit und endseitig der stangenförmigen Drehachsen angeordnet sind und parallel zueinander verlaufen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 ein schematisch dargestelltes Kraftfahrzeug mit einer exemplarisch angedeuteten erfindungsgemäßen Vorrichtung,
Figur 2 eine perspektivische Darstellung einer Kameraeinheit, eines Deckelelements und einer Bewegungsmechanik der erfindungsgemäßen Vorrichtung bzw. Anordnung,
Figur 3 eine perspektivische Einzelteildarstellung der erfindungsgemäßen Vorrichtung bzw. Anordnung aus Figur 2,
Figur 4 die erfindungsgemäße Vorrichtung in einer Seitenansicht mit der in ihrer Ruheposition angeordneten Kameraeinheit,
Figur 5 die erfindungsgemäße Vorrichtung in einer weiteren Seitenansicht mit der in ihrer Aktivposition angeordneten Kameraeinheit,
Figur 6 eine perspektivische Rückansicht auf die erfindungsgemäße Anordnung,
Figur 7 eine weitere Perspektivansicht auf ein Bewegungselement der erfindungsgemäßen Vorrichtung,
Figur 8 eine noch weitere Perspektivansicht auf ein Hebelelement der erfindungsgemäßen Vorrichtung,
Figur 9 eine seitliche Schnittansicht auf eine Bewegungsmechanik der erfindungsgemäßen Vorrichtung bei in ihrer Ruheposition angeordneter Kameraeinheit und
Figur 10 eine seitliche Schnittansicht auf die Bewegungsmechanik der erfindungsgemäßen Vorrichtung bei in ihrer Aktivposition angeordneter Kameraeinheit.

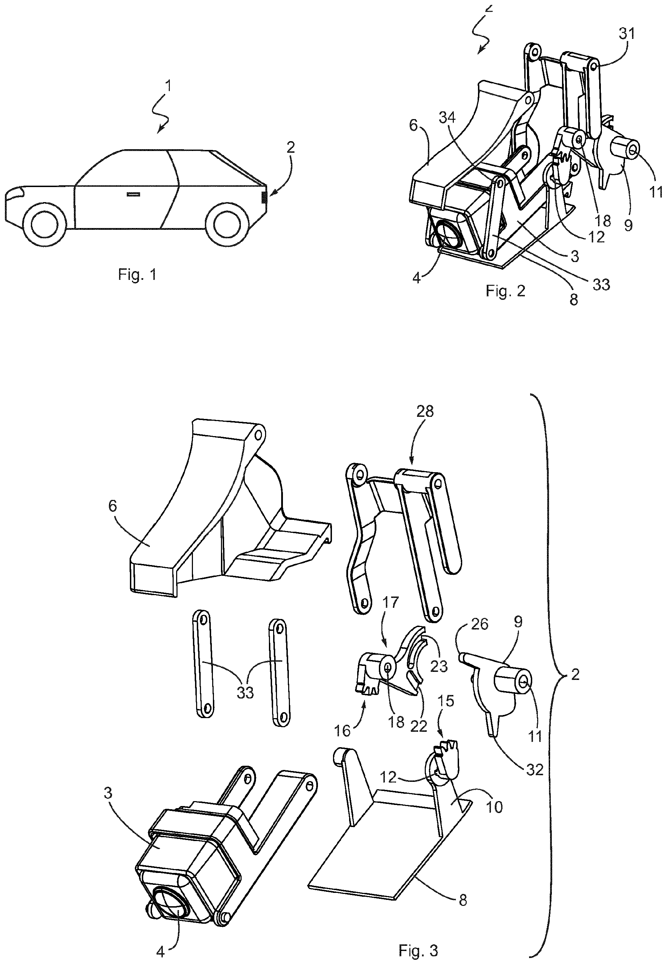

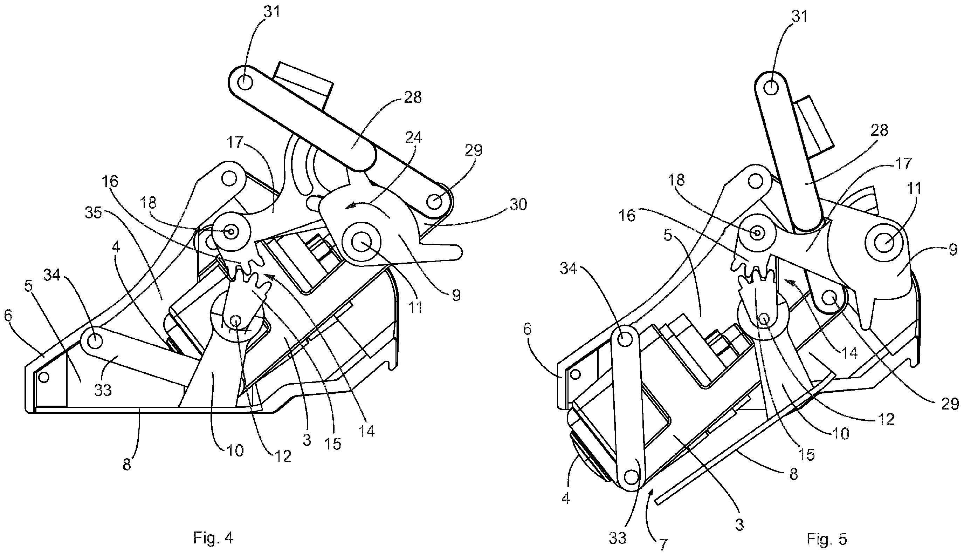

Figur 1 zeigt eine Seitenansicht eines Kraftfahrzeugs 1, welches an seinem Heck oder an seiner Stoßstange eine Ausführungsform einer Vorrichtung 2 gemäß der vorliegenden Erfindung aufweist. Wie Figur 2 zeigt, umfasst die Vorrichtung 2 eine Kameraeinheit 3, die zur Bilderfassung des Außenbereiches des Kraftfahrzeugs 1 dient und zu diesem Zweck mit einem Objektiv 4 ausgestattet ist. Die Kameraeinheit 3 ist mit Bezug auf die Figuren 4 und 5 in einer Einbuchtung 5 einer Trägerbaugruppe 6 untergebracht. Dabei ist die Kameraeinheit 3 mit einem Mechanismus, auf den noch im Folgenden eingegangen wird, zwischen einer Ruheposition (siehe Figur 4) und einer Aktivposition (siehe Figur 5) in der Trägerbaugruppe 6 bewegbar aufgenommen. In der Ruheposition ist die Kameraeinheit 3 in der Trägerbaugruppe 6 zurückgezogen und geschützt in der Einbuchtung 5 der Trägerbaugruppe 6 angeordnet, wohingegen die Kameraeinheit 3 in der Aktivposition zumindest abschnittsweise aus einer Durchgangsöffnung 7 der Trägerbaugruppe 6 nach außen hervorsteht und aus der Durchgangsöffnung 7 nach unten herausragt. In der Ruheposition der Kameraeinheit 3 verschließt ein in den Figuren 2 bis 6 gezeigtes Deckelelement 8 die Durchgangsöffnung 7 der Trägerbaugruppe 6, die Teil der Karosserie des Kraftfahrzeugs 1 oder ein separates Gehäuse sein kann, welches in die Karosserie des Kraftfahrzeugs 1 einbaubar ist. Das Deckelelement 8 selbst ist zwischen einer Schließposition (siehe Figur 4), in welcher es die Durchgangsöffnung 7 der Trägerbaugruppe 6 verschließt, und einer Öffnungsposition (siehe Figur 5), in welcher das Deckelelement 8 die Durchgangsöffnung 7 für die Kameraeinheit 3 freigibt, bewegbar ausgebildet. Mit Hilfe des Deckelelements 8 ist die Kameraeinheit 3 vor Umwelteinflüssen wie Regen, Staub, Sonneneinstrahlung, Schmutz und auch vor einem möglichen Diebstahl geschützt.

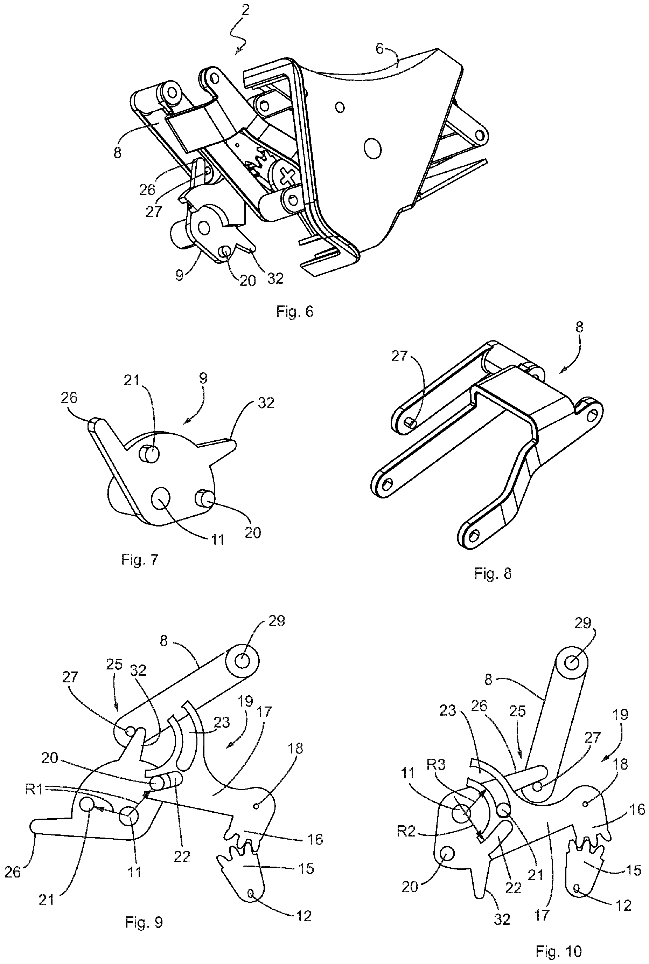

Wie vorstehend bereits erwähnt, erfolgt die Aktivierung der Kameraeinheit 3 in zweit Stufen, wobei sich in einer ersten Stufe das Deckelelement 8 in seine Öffnungsposition bewegt und in einer zweiten Stufen, die im Anschluss an die erste Stufe erfolgt, sich die Kameraeinheit 3 in ihre Aktivposition bewegt. Um das Deckelelement 8 aus seiner Schließstellung (siehe Figur 4) in seine Öffnungsstellung (siehe Figur 5) zu bewegen, umfasst die Vorrichtung bzw. Anordnung 2 ein Bewegungselement 9, welches aus einer Bereitschaftsposition (siehe Figur 4 oder 9) über eine Zwischenposition in eine Betriebsposition (siehe Figur 5 oder 10) bewegbar ist, und ein Übertragungselement 10, welches an dem Deckelelement 8 angeformt ist. Das Bewegungselement 9 ist an einer ersten Drehachse 11 des Trägerbauteils 6 drehbar gelagert, wohingegen das Übertragungselement 10 an einer zweiten Drehachse 12 des Trägerbauteils 6 drehbar gelagert ist. Um nun das Deckelelement 8 zu bewegen, sind bei der erfindungsgemäßen Vorrichtung bzw. Anordnung 2 das Bewegungselement 9 und das Übertragungselement 10 über eine Deckelverbindung 14 (siehe zum Beispiel Figur 4) miteinander verbunden. Die Deckelverbindung 14 ist dabei derart ausgebildet, dass sie bei der Bewegung des Bewegungselements 9 aus der Bereitschaftsposition in die Zwischenposition das Deckelelement 8 aus der Schließposition in die Öffnungsposition bewegt.

Die Deckelverbindung 14 wird von einem ersten Zahnradsegment 15 und einem zweiten Zahnradsegment 16 gebildet, die miteinander in Eingriff stehen (siehe zum Beispiel Figuren 4 und 5). Dabei ist das erste Zahnradsegment 15 an dem Übertragungselement 10 ausgebildet, wohingegen das zweite Zahnradsegment 16 an einem Betätigungselement 17 ausgebildet ist. Das Betätigungselement 17 ist an einer dritten Drehachse 18 des Trägerbauteils 6 drehbar gelagert. Ferner ist das Betätigungselement 17 mit dem Bewegungselement 9 über eine Bewegungsmechanik 19 (siehe Figuren 9 und 10) bewegungsgekoppelt und mit Hilfe der Bewegungsmechanik zwischen einer Grundposition (siehe Figur 9) und einer Halteposition (siehe Figur 10) um die dritte Drehachse 18 drehbar gelagert. Insbesondere ist hierbei das Betätigungselement 17 in der Bereitschaftsposition des Bewegungselements 9 in der Grundposition angeordnet, wohingegen das Betätigungselement 17 in der Zwischenposition sowie in der Betriebsposition des Bewegungselements 9 in der Halteposition angeordnet ist.

Die aus den Figuren 9 und 10 ersichtliche Bewegungsmechanik 19 umfasst einen ersten Zapfen 20 und einen zweiten Zapfen 21, die im Abstand zur ersten Drehachse 11 an dem Bewegungselement 9 angeformt sind. Die beiden Zapfen 20, 21 sind dabei etwa auf einem identischen Radius R1 zur ersten Drehachse 11 an dem Bewegungselement 9 ausgebildet (siehe zum Beispiel Figur 9). Ferner umfasst die Bewegungsmechanik 19 eine erste Führungsausnehmung 22 und eine zweite Führungsausnehmung 23, die beide in dem Betätigungselement 17 ausgebildet sind. Mit Hilfe der so gestalteten Bewegungsmechanik 19 ist es nun möglich, dass bei der Bewegung des Bewegungselements 9 aus der Bereitschaftsposition in die Zwischenposition der erste Zapfen 20 in der ersten Führungsausnehmung 22 das Betätigungselement 17 aus der Grundposition in die Halteposition drängend angeordnet ist, wohingegen bei der Bewegung des Bewegungselements 9 aus der Zwischenposition in die Betriebsposition der zweite Zapfen 21 in der zweiten Führungsausnehmung 23 sich bewegend und das Betätigungselement 17 in der Halteposition haltend angeordnet ist. Obgleich sich der zweite Zapfen 21 während der Bewegung des Bewegungselements 9 innerhalb der zweiten Führungsausnehmung 23 bewegt, bewirkt die Bewegung des Bewegungselements 9 keine Bewegung des Betätigungselements 17, was daran liegt, dass der Krümmungsradius R3 der zweiten Führungsausnehmung 23 mit dem Radius R1 übereinstimmt, mit welchem zumindest der zweite Zapfen 21 um die erste Drehachse 11 schwenkt. Folglich sind die Krümmungsradien R2, R3 (siehe Figur 10) der ersten Führungsausnehmung 22 und der zweiten Führungsausnehmung 23 unterschiedlich ausgebildet.

Mit Hilfe der vorstehend beschriebenen konstruktiven Ausgestaltung der Deckelverbindung 14 und der Bewegungsmechanik 19 wird das Deckelelement 8 aus seiner Schließposition in seine Öffnungsposition bewegt. Dabei ist zum Beispiel die erste Drehachse 11 mit einem in den Figuren nicht dargestellten Antriebselement verbunden und mit dem Bewegungselement 9 drehfest verbunden, so dass eine angetriebene erste Drehachse 11 bei ihrer Drehung das Bewegungselement 9 mitdreht. Mit Bezug auf Figur 4 wird die erste Drehachse 11 entgegen den Uhrzeigersinn (Pfeilrichtung 24) gedreht, wodurch sich das Bewegungselement 9 in die gleiche Richtung dreht. Mit Bezug auf Figur 9, die eine rückseitige Schnittansicht von Figur 4 ist, dreht sich hierin das Bewegungselement 9 dementsprechend im Uhrzeigersinn. Dabei ist der erste Zapfen 21 in der ersten Führungsausnehmung 22 angeordnet und verschwenkt bei seiner Drehbewegung um die erste Drehachse 11 das Betätigungselement 17 um die dritte Drehachse 18, wodurch das zweite Zahnradsegment 16 das erste Zahnradsegment 15, welches über da Übertragungselement 10 mit dem Deckelelement 8 drehfest verbunden ist, um die zweite Drehachse 12 dreht, wodurch letztlich das Deckelelement 8 aus seiner Schließstellung in die Öffnungsstellung bewegt wird. Aufgrund dessen, dass der Krümmungsradius R2 ungleich dem Radius R1 des ersten Zapfens 21 ist, dreht der erste Zapfen 21 bei seiner Bewegung in der ersten Führungsausnehmung 22 das Betätigungselement 17 um die dritte Drehachse 18, bis das Betätigungselement aus der in Figur 9 gezeigten Grundposition in die in Figur 10 gezeigte Halteposition bewegt ist. In der Halteposition gelangt dann der erste Zapfen 20 aus der ersten Führungsausnehmung 22 und der zweite Zapfen 21 taucht in die zweite Führungsausnehmung 23 ein, wobei sich gleichzeitig das Bewegungselement 9 aus seiner Zwischenposition in seine Betriebsposition (siehe zum Beispiel Figur 10) bewegt. Bei dieser Bewegung wird das Betätigungselement 17 über die beschriebene Bewegungsmechanik 19 in seiner Halteposition gehalten.

Demnach wird aus den obigen Ausführungen ersichtlich, dass die Bewegung des Bewegungselements 9 aus seiner Zwischenposition in seine Betriebsposition keine Wirkung auf das Deckelelement 8 ausübt. Vielmehr bewirkt die Bewegung aus der Zwischenposition in die Betriebsposition, dass nun in einem zweiten Schritt die Kameraeinheit 3 aus ihrer Ruheposition in die Aktivposition bewegt wird, nachdem das Deckelelement 8 (siehe beispielsweise Figur 8) in seine Öffnungsposition bewegt wurde. Die schrittweise Bewegung, d.h. zu erst das Deckelelement 3 und dann erst die Kameraeinheit 3 bewegen, hat den Vorteil, dass ein kleiner Antriebsmotor verwendet werden kann, da nicht beide Bauteile und deren Bewegungsmimik gleichzeitig bewegt werden müssen.

Um die Kameraeinheit 3 aus der Ruheposition in die Aktivposition zu bewegen, sind das Bewegungselement 9 und die Kameraeinheit 3 über eine Kameraverbindung 25 miteinander verbunden, die beispielsweise auch aus den Figuren 9 und 10 ersichtlich ist. Bei der Bewegung des Bewegungselements 9 aus der Zwischenposition in die Betriebsposition hält die Kameraverbindung 25 das Deckelelement 8 in der Öffnungsposition und bewegt die Kameraeinheit 3 aus der Ruheposition in die Aktivposition. Um dies zu realisieren, umfasst die Kameraverbindung 25 einen ersten Hebelarm 26, der an dem Bewegungselement 9 ausgebildet ist und radial nach außen von diesem absteht, und einem Mitnehmerstift 27, der an einem Hebelelement 28 angeformt ist (siehe zum Beispiel Figur 7). Das Hebelelement 28 ist ferner über eine Drehgelenkverbindung 29 (siehe zum Beispiel Figuren 4, 5, 9 oder 10) drehbar mit der Kameraeinheit 3 verbunden. Dadurch ist die Kameraeinheit 3 an ihrem dem Objektiv 4 abgewandten Längsende 30 über das Hebelelement 28 drehbar an einer vierten Drehachse 31 des Trägerbauteils 6 (siehe Figur 4 oder 5) gelagert.

Um die Kameraeinheit 3 nun in die Öffnungsstellung zu bewegen, kommt der erste Hebelarm 26 des Bewegungselements 9 bei dessen Bewegung in die Zwischenposition in Anlage an den Mitnehmerstift 27. Bei der Bewegung in die Betriebsposition drängt dann der erste Hebelarm 26 derart den Mitnehmerstift 27, dass das Hebelelement 28 um die vierte Drehachse 31 schwenkt, wodurch sich die Kameraeinheit 3 aus der Ruheposition in die Aktivposition bewegt.

Bei der vorstehend beschriebenen Öffnungs-AktivierungsBewegung der Vorrichtung bzw. Anordnung 2, die zweistufig bzw. in zwei aufeinander folgenden Schritten erfolgt, dreht das Bewegungselement 9 bei seiner Bewegung aus der Bereitschaftsposition in die Betriebsposition um die erste Drehachse 11, das Deckelelement 8 dreht bei seiner Bewegung aus der Schließposition in die Öffnungsposition um die zweite Drehachse 12 dreht, und die Kameraeinheit 3 schwenkt bei ihrer Bewegung aus der Ruheposition in die Aktivposition wenigstens um die vierte Drehachse 31 und kann optional noch um eine Schwenkachse 34 schwenken (siehe zum Beispiel Figur 4).

Damit die Kameraeinheit 3 auch wieder in die Ruhestellung gelangen kann, umfasst die Kameraverbindung 25 einen zweiten Hebelarm 32, wobei der Mitnehmerstift 27 zwischen dem ersten und zweiten Hebelarm 26, 32 angeordnet ist. Bei einer Bewegung des Bewegungselements 9 aus der Betriebsposition in die Bereitschaftsposition liegt dann der zweite Hebelarm 32 an dem Mitnehmerstift 27 an (siehe Figur 9) und drängt die Kameraeinheit 3 zurück in die Ruheposition.

Die Bewegung der Kameraeinheit 3 kann durch ein Schwenkelement 33 noch kompakter gestaltet werden. Das Schwenkelement 33 ist hebelarmförmig ausgebildet und ist mit einem ersten Längsende gelenkig an der Schwenkachse 34 des Trägerbauteils 6 gelagert, wohingegen das andere Längsende die Kameraeinheit 3 an ihrem das Objektiv 4 aufweisenden Längsende 35 drehbar lagert.

Für die in dem Ausführungsbeispiel gezeigte Erfindung ist es charakteristisch, dass die Aktivierung der Kameraeinheit 3 in einem zweistufigen Bewegungsablauf erfolgt, wobei in einem ersten Schritt zunächst das Deckelelement 8 sich in seine Öffnungsposition bewegt und anschließend in einem zweiten Schritt sich die Kameraeinheit 3 in ihre Aktivposition bewegt.

Zusammenfassend umfasst die erfindungsgemäße Vorrichtung 2, die genauer gesagt auch eine erfindungsgemäße Anordnung 2 zur Bilderfassung des Außenbereiches eines Kraftfahrzeugs 1 ist, die Kameraeinheit 3 mit dem Objektiv 4, die Trägerbaugruppe 6, die die Durchgangsöffnung 7 aufweist und in welcher die Kameraeinheit 3 zwischen der in die Trägerbaugruppe 6 zurückgezogenen Ruheposition und der Aktivposition, in welcher die Kameraeinheit 3 zumindest abschnittsweise aus der Durchgangsöffnung 7 der Trägerbaugruppe 6 nach außen hervorsteht, bewegbar aufgenommen ist, und das Deckelelement 8, das zwischen der die Durchgangsöffnung 7 der Trägerbaugruppe 6 verschließenden Schließposition und der Öffnungsposition bewegbar ausgebildet ist. Gekennzeichnet ist die Erfindung durch das Bewegungselement 9, welches aus der Bereitschaftsposition über die Zwischenposition in eine Betriebsposition bewegbar ist. Dabei ist das Bewegungselement 9 an der ersten Drehachse 11 des Trägerbauteils 6 drehbar gelagert, wobei das an der zweiten Drehachse 12 des Trägerbauteils 6 drehbar gelagerte Übertragungselement 10 an dem Deckelelement 8 angeformt ist. Ferner sind das Bewegungselement 9 und das Übertragungselement 10 über die bei der Bewegung des Bewegungselements 9 aus der Bereitschaftsposition in die Zwischenposition das Deckelelement 8 aus der Schließposition in die Öffnungsposition bewegende Deckelverbindung 14 miteinander verbunden. Schließlich sind das Bewegungselement 9 und die Kameraeinheit 3 über die bei der Bewegung des Bewegungselements 9 aus der Zwischenposition in die Betriebsposition das Deckelelement 8 in der Öffnungsposition haltende und die Kameraeinheit 3 aus der Ruheposition in die Aktivposition bewegende Kameraverbindung 25 miteinander verbunden.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird.

## Patentansprüche

1. Vorrichtung (2) zur Bilderfassung des Außenbereiches eines Kraftfahrzeugs (1), aufweisend
eine Kameraeinheit (3) mit einem Objektiv (4),
eine Trägerbaugruppe (6), die eine Durchgangsöffnung (7) aufweist und in welcher die Kameraeinheit (3) zwischen einer in die Trägerbaugruppe (6) zurückgezogenen Ruheposition und einer Aktivposition, in welcher die Kameraeinheit (3) zumindest abschnittsweise aus der Durchgangsöffnung (7) der Trägerbaugruppe (6) nach außen hervorsteht, bewegbar aufgenommen ist,
ein Deckelelement (8), das zwischen einer die Durchgangsöffnung (7) der Trägerbaugruppe (6) verschließenden Schließposition und einer Öffnungsposition bewegbar ausgebildet ist, **dadurch gekennzeichnet, dass** ein Bewegungselement (9), welches aus einer Bereitschaftsposition über eine Zwischenposition in eine Betriebsposition bewegbar ist,
wobei das Bewegungselement (9) an einer ersten Drehachse (11) des Trägerbauteils (6) drehbar gelagert ist und ein an einer zweiten Drehachse (12) des Trägerbauteils (6) drehbar gelagertes Übertragungselement (10) an dem Deckelelement (8) angeformt ist,
wobei das Bewegungselement (9) und das Übertragungselement (10) über eine bei der Bewegung des Bewegungselements (9) aus der Bereitschaftsposition in die Zwischenposition das Deckelelement (8) aus der Schließposition in die Öffnungsposition bewegende Deckelverbindung (14) miteinander verbunden sind, und
wobei das Bewegungselement (9) und die Kameraeinheit (3) über eine bei der Bewegung des Bewegungselements (9) aus der Zwischenposition in die Betriebsposition das Deckelelement (8) in der Öffnungsposition haltende und die Kameraeinheit (3) aus der Ruheposition in die Aktivposition bewegende Kameraverbindung (25) miteinander verbunden sind.

2. Vorrichtung (2) nach Anspruch 1, wobei die Deckelverbindung (14) von einem ersten Zahnradsegment (15), welches an dem Übertragungselement (10) ausgebildet ist, und einem mit dem ersten Zahnradsegment (15) in Eingriff stehenden zweiten Zahnradsegment (16) gebildet wird.

3. Vorrichtung (2) nach Anspruch 2, wobei das zweite Zahnradsegment (16) an einem an einer dritten Drehachse (18) des Trägerbauteils (6) drehbar gelagerten Betätigungselement (17) ausgebildet ist, welches mit dem Bewegungselement (9) über eine Bewegungsmechanik (19) bewegungsgekoppelt ist und zwischen einer Grundposition und einer Halteposition um die dritte Drehachse (18) drehbar ist.

4. Vorrichtung (2) nach Anspruch 3, wobei die Bewegungsmechanik (19) einen ersten Zapfen (20), welcher an dem Bewegungselement (9) im Abstand zur ersten Drehachse (11) ausgebildet ist, und eine erste Führungsausnehmung (22), die in dem Betätigungselement (17) ausgebildet ist, umfasst, wobei bei der Bewegung des Bewegungselements (9) aus der Bereitschaftsposition in die Zwischenposition der erste Zapfen (20) in der ersten Führungsausnehmung (22) das Betätigungselement (17) aus der Grundposition in die Halteposition drängend angeordnet ist.

5. Vorrichtung (2) nach Anspruch 4, wobei die Bewegungsmechanik (19) einen zweiten Zapfen (21), welcher an dem Bewegungselement (9) im Abstand zur ersten Drehachse (11) ausgebildet ist, und eine zweite Führungsausnehmung (23), die in dem Betätigungselement (17) ausgebildet ist, umfasst, wobei bei der Bewegung des Bewegungselements (9) aus der Zwischenposition in die Betriebsposition der zweite Zapfen (21) in der zweiten Führungsausnehmung (23) sich bewegend und das Betätigungselement (17) in der Halteposition haltend angeordnet ist.

6. Vorrichtung (2) nach Anspruch 5, wobei die Krümmungsradien (R2, R3) der ersten Führungsausnehmung (22) und der zweiten Führungsausnehmung (23) unterschiedlich sind.

7. Vorrichtung (2) nach einem der vorhergehenden Ansprüche, wobei die Kameraverbindung (25) von einem ersten Hebelarm (26), der an dem Bewegungselement (9) ausgebildet ist und radial nach außen absteht, und einem Mitnehmerstift (27), der an einem Hebelelement (28) angeformt ist, ausgebildet ist, wobei das Hebelelement (28) über eine Drehgelenkverbindung (29) drehbar mit der Kameraeinheit (3) verbunden ist.

8. Vorrichtung (2) nach Anspruch 7, wobei die Kameraeinheit (3) an ihrem dem Objektiv (4) abgewandten Längsende (30) über das Hebelelement (28) drehbar an einer vierten Drehachse (31) des Trägerbauteils (6) gelagert ist.

9. Vorrichtung (2) nach Anspruch 8, wobei der erste Hebelarm (26) in der Zwischenposition des Bewegungselements (9) an dem Mitnehmerstift (27) anliegt und bei Bewegung in die Betriebsposition derart den Mitnehmerstift (27) drängt, dass die Verschwenkung des Hebelelements (28) um die vierte Drehachse (31) die Kameraeinheit (3) aus der Ruheposition in die Aktivposition bewegt.

10. Vorrichtung (2) nach einem der Ansprüche 7 bis 9, wobei die Kameraverbindung (25) einen zweiten Hebelarm (32) umfasst und der Mitnehmerstift (27) zwischen dem ersten und zweiten Hebelarm (26, 32) angeordnet ist, wobei bei einer Bewegung des Bewegungselements (9) aus der Betriebsposition in die Bereitschaftsposition der zweite Hebelarm (32) an dem Mitnehmerstift (27) die Kameraeinheit (3) zurück in die Ruheposition bewegend anliegt.

11. Vorrichtung (2) nach einem der vorhergehenden Ansprüche, wobei die Kameraeinheit (3) an ihrem das Objektiv (4) aufweisenden Längsende (35) über ein Schwenkelement (33) drehbar an einer Schwenkachse (34) des Trägerbauteils (6) gelagert ist.

12. Vorrichtung (2) nach einem der vorhergehenden Ansprüche, wobei das Bewegungselement (9) bei seiner Bewegung aus der Bereitschaftsposition in die Betriebsposition um die erste Drehachse (11) dreht und das Deckelelement (8) bei seiner Bewegung aus der Schließposition in die Öffnungsposition um die zweite Drehachse (12) dreht.

## Claims

1. A device (2) for purposes of capturing the image of the exterior region of a motor vehicle (1), having
a camera unit (3) with an objective lens (4),
a support component (6), which has a passage opening (7), and in which the camera unit (3) is accommodated such that it can move between an inactive position, retracted into the support component (6), and an active position in which the camera unit (3) at least partially protrudes outwards from the passage opening (7) of the support component (6),
a cover element (8), which is designed such that it can move between a closed position, in which it closes the passage opening (7) of the support component (6), and an open position, and
**characterised in that**,
a movement element (9), which can be moved from a standby position, via an intermediate position, into an operating position, wherein
the movement element (9) is mounted such that it can rotate about a first axis of rotation (11) of the support component (6), and a transmission element (10), mounted such that it can rotate about a second axis of rotation (12) of the support component (6), is integrally formed on the cover element (8), wherein
the movement element (9) and the transmission element (10) are connected to one another via a cover linkage (14), which moves the cover element (8) from the closed position into the open position as the movement element (9) moves from the standby position into the intermediate position, and wherein
the movement element (9) and the camera unit (3) are connected to one another via a camera linkage (25), which holds the cover element (8) in the opening position as the movement element (9) moves from the intermediate position into the operating position, and moves the camera unit (3) from the inactive position into the active position.

2. The device (2) in accordance with claim 1, wherein
the cover linkage (14) is formed by a first gear segment (15), which is formed on the transmission element (10), and a second gear segment (16), which is engaged with the first gear segment (15).

3. The device (2) in accordance with claim 2, wherein
the second gear segment (16) is formed on an actuation element (17), which is mounted such that it can rotate about a third rotational axis (18) of the support component (6), which actuation element is coupled in its motion with the movement element (9) via a movement mechanism (19), and can rotate about the third rotational axis (18) between a home position and a holding position.

4. The device (2) in accordance with claim 3, wherein
the movement mechanism (19) comprises a first pin (20), which is formed on the movement element (9) at a distance from the first axis of rotation (11), and a first recess guide (22), which is formed in the actuation element (17), wherein as the movement element (9) moves from the standby position into the intermediate position the first pin (20) in the first recess guide (22) is arranged such that the actuation element (17) is pushed from the home position into the holding position.

5. The device (2) in accordance with claim 4, wherein
the movement mechanism (19) comprises a second pin (21), which is formed on the movement element (9) at a distance from the first axis of rotation (11), and a second recess guide (23), which is formed in the actuation element (17), wherein
as the movement element (9) moves from the intermediate position into the operating position, the second pin (21) is arranged such that it moves in the second recess guide (23), and holds the actuation element (17) in the holding position.

6. The device (2) in accordance with claim 5, wherein
the radii of curvature (R2, R3) of the first recess guide (22) and the second recess guide (23) are different.

7. The device (2) in accordance with one of the preceding claims, wherein
the camera linkage (25) is formed by a first lever arm (26), which is formed on the movement element (9) and projects radially outward, and a driving pin (27), which is integrally formed on a lever element (28), wherein
the lever element (28) is connected to the camera unit (3) such that it can rotate via a pivotal joint linkage (29).

8. The device (2) in accordance with claim 7, wherein
the camera unit (3) is mounted at its longitudinal end (30) facing away from the objective (4) such that it can rotate, via the lever element (28), about a fourth axis of rotation (31) of the support component (6).

9. The device (2) in accordance with claim 8, wherein
the first lever arm (26) bears against the driving pin (27) in the intermediate position of the movement element (9) and, when moved into the operating position, pushes the driving pin (27) such that the pivoting of the lever element (28) about the fourth axis of rotation (31) moves the camera unit (3) from the inactive position into the active position.

10. The device (2) in accordance with one of the claims 7 to 9, wherein
the camera linkage (25) comprises a second lever arm (32), and the driving pin (27) is arranged between the first and second lever arms (26, 32), wherein
as the movement element (9) moves from the operating position into the standby position, the second lever arm (32) bears against the driving pin (27) so as to move the camera unit (3) back into the inactive position.

11. The device (2) in accordance with one of the preceding claims, wherein
the camera unit (3) is mounted at its longitudinal end (35), which has the objective lens (4), such that it can rotate about a pivotal axis (34) of the support component (6) via a pivotal element (33).

12. The device (2) in accordance with one of the preceding claims, wherein
the movement element (9), as it moves from the standby position into the operating position, rotates about the first axis of rotation (11), and the cover element (8), as it moves from the closed position into the open position, rotates about the second axis of rotation (12).

## Revendications

1. Dispositif (2) de prise d'images de l'extérieur d'un véhicule (1), présentant :
une unité de caméra (3) dotée d'un objectif (4),
un module porteur (6) qui présente un orifice traversant (7) et dans lequel l'unité de caméra (3) est reçue de manière à pouvoir bouger entre une position de repos retirée dans le module porteur (6) et une position active dans laquelle l'unité de caméra (3) dépasse vers l'extérieur du moins par sections de l'orifice traversant (7) du module porteur (6),
un élément couvercle (8) qui est conçu de manière à pouvoir bouger entre une position de fermeture fermant l'orifice traversant (7) du module porteur (6) et une position d'ouverture,
**caractérisé en ce qu'**un élément de mouvement (9) est mobile depuis une position opérationnelle en passant par une position intermédiaire vers une position de fonctionnement,
l'élément de mouvement (9) s'appuyant en rotation au niveau d'un premier axe de rotation (11) de la pièce porteuse (6) et un élément de transfert (10) s'appuyant en rotation au niveau d'un deuxième axe de rotation (12) de la pièce porteuse (6) étant conformé au niveau de l'élément couvercle (8),
l'élément de mouvement (9) et l'élément de transfert (10) étant connectes entre eux par un raccord de couvercle (14) déplaçant l'élément couvercle (8) de la position de fermeture vers la position d'ouverture en cas de mouvement de l'élément de mouvement (9) depuis la position opérationnelle vers la position intermédiaire, et
l'élément de mouvement (9) et l'unité de caméra (3) étant connectés entre eux par un raccord de caméra (25) maintenant l'élément couvercle (8) dans la position d'ouverture et déplaçant l'unité de caméra (3) de la position de repos vers la position active en cas de mouvement de l'élément de mouvement (9) depuis la position intermédiaire vers la position de fonctionnement.

2. Dispositif (2) selon la revendication 1, dans lequel le corps de couvercle (14) est constitué d'un premier segment de roue dentée (15) qui est réalisé au niveau de l'élément de transfert (10) et d'un second segment de roue dentée (16) en prise avec le premier segment de roue dentée (15).

3. Dispositif (2) selon la revendication 2, dans lequel le second segment de roue dentée (16) est réalisé au niveau d'un élément d'actionnement (17) s'appuyant de manière à pouvoir tourner au niveau d'un troisième axe de rotation (18) de la pièce porteuse (6) et qui est couplé au niveau mouvement avec l'élément de mouvement (9) par un mécanisme de mouvement (19) et peut tourner entre une position de base et une position de retenue autour du troisième axe de rotation (18).

4. Dispositif (2) selon la revendication 3, dans lequel le mécanisme de mouvement (19) comprend un premier tourillon (20) qui est réalisé au niveau de l'élément de mouvement (9) à distance du premier axe de rotation (11) et un premier évidement de guidage (22) qui est réalisé dans l'élément d'actionnement (17), sachant que, lors du mouvement de l'élément de mouvement (9) de la position opérationnelle vers la position intermédiaire, le premier tourillon (20) est disposé dans le premier évidement de guidage (22) de manière à pousser l'élément d'actionnement (17) de la position de base vers la position de retenue.

5. Dispositif (2) selon la revendication 4, dans lequel le mécanisme de mouvement (19) comprend un second tourillon (21) qui est réalisé au niveau de l'élément de mouvement (9) à distance du premier axe de rotation (11) et un second évidement de guidage (23) qui est réalisé dans l'élément d'actionnement (17), sachant que, lors du mouvement de l'élément de mouvement (9) de la position intermédiaire vers la position de fonctionnement, le second tourillon (21) est disposé de manière à se déplacer dans le second évidement de guidage (23) et à maintenir l'élément d'actionnement (17) dans la position de retenue.

6. Dispositif (2) selon la revendication 5, dans lequel les rayons de courbure (R2, R3) du premier évidement de guidage (22) et du second évidement de guidage (23) sont différents.

7. Dispositif (2) selon une des revendications précédentes, dans lequel le raccord de caméra (25) est constitué d'un premier bras de levier (26) qui est réalisé au niveau de l'élément de mouvement (9) et dépasse radialement vers l'extérieur, et d'une tige d'entraînement (27) qui est conformée au niveau d'un élément de levier (28), l'élément de levier (28) étant connecté par un joint à rotule (29) de manière à pouvoir tourner avec l'unité de caméra (3).

8. Dispositif (2) selon la revendication 7, dans lequel l'unité de caméra (3) s'appuie par son extrémité longitudinale (30) détournée de l'objectif (4) par l'intermédiaire de l'élément de levier (28) de manière à pouvoir tourner au niveau d'un quatrième axe de rotation (31) de la pièce porteuse (6).

9. Dispositif (2) selon la revendication 8, dans lequel le premier bras de levier (26), dans la position intermédiaire de l'élément de mouvement (9), repose au niveau de la tige d'entraînement (27) et, en cas de mouvement vers la position de fonctionnement, pousse la tige d'entraînement (27) de manière à ce que le pivotement de l'élément de levier (28) autour du quatrième axe de rotation (31). Déplace l'unité de caméra (3) de la position de repos vers la position active.

10. Dispositif (2) selon une des revendications 7 à 9, dans lequel l'unité de caméra (25) comprend un second bras de levier (32) et la tige d'entraînement (27) est disposée entre le premier et le second bras de levier (26,32), sachant que, lors d'un mouvement de l'élément de mouvement (9) de la position de fonctionnement vers la position opérationnelle, le second bras de levier (32) repose au niveau de la tige d'entraînement (27) de manière à ramener l'unité de caméra (3) vers la position de repos.

11. Dispositif (2) selon une des revendications précédentes, dans lequel l'unité de caméra (3) s'appuie par son extrémité longitudinale (35) tournée vers l'objectif (4) par l'intermédiaire d'un élément pivotant (33) de manière à pouvoir tourner au niveau d'un axe de pivotement (34) de la pièce porteuse (6).

12. Dispositif (2) selon une des revendications précédentes, dans lequel l'élément de mouvement (9), lors de son mouvement de la position opérationnelle vers la position de fonctionnement, tourne autour du premier axe de rotation (11) et que l'élément couvercle (8), lors de son mouvement de la position de fermeture vers la position d'ouverture, tourne autour du deuxième axe de rotation (12).
